# EUROPEAN PATENT SPECIFICATION

(11) **EP 0 576 687 B1**
(45) Date of publication and mention of the grant of the patent: **29.08.2001**
(21) Application number: 93902512.8
(22) Date of filing: 21.01.1993
(51) Int. Cl.: C11D 7/50, C11D 7/60, B01D 12/00

(54) **CLEANING AND DRYING SOLVENT**
LÖSUNGSMITTEL ZUM REINIGEN UND TROCKNEN
SOLVANT DE NETTOYAGE ET DE SECHAGE

(30) Priority: 21.01.1992 JP 2999892; 07.02.1992 JP 5686792; 09.04.1992 JP 11700992; 15.05.1992 JP 14863392; 05.06.1992 JP 17172192
(43) Date of publication of application: 05.01.1994
(73) Proprietor: Olympus Optical Co., Ltd., Tokyo 151-0072 (JP)
(72) Inventor: HIJINO, Masamichi, Hachiohji-shi, Tokyo 193 (JP); SHIRAI, Michio, Kodaira-shi, Tokyo 187 (JP); UZAWA, Kunihiko, Sumiyoshi-ku, Osaka-shi, Osaka 558 (JP)
(74) Representative: Gaunt, Robert John
(86) International application number: JP9300071
(87) International publication number: WO9314184

(56) References cited:
- EP-A- 0 277 825
- EP-A- 0 473 795
- EP-A- 0 518 555
- WO-A-91/13697
- JP-A- 53 115 708
- JP-A- 61 119 765
- JP-A- 62 273 299
- US-A- 4 501 682
- US-A- 4 613 380
- US-A- 4 689 168

## Description

### TECHNICAL FIELD

This invention relates to a cleaning and drying solvent suitable for simple handle-cleaning such as depreasing and finish cleaning of industrial parts made from metal, glass, plastics or the like such as electron parts, molded parts, mold or the like, and more particularly to a cleaning and drying solvent capable of being used as a replacement for fron.

### BACKGROUND ART

In general, optical parts and molded parts are simply cleaned with a cotton paper or cloth impregnated with a solvent or the like in hand in order to remove fingerprint, mist and the like after the production. Furthermore, the similar cleaning in hand is conducted for the maintenance of a mold or the like. On the other hand, industrial parts such as optical part, electron part and the like are precisely cleaned for the degreasing and also dried with a drying solvent after the cleaning. As a solvent used for such cleaning and drying treatment, 1,1,2-trichloro-1,2,2-trifluoroethane (fron 113) is used from the old time. The fron 113 is incombustible, small in the toxicity against living bodies, fast in the drying rate and has no erosion against high molecular weight materials such as plastics, rubber and the like, but has a selective solubility dissolving fats and oil or the like. On the other hand, in order to reduce the amount of the fron 113 used and increase the degreasing force, there are developed many mixed solvents and azeotropic compositions. For example, Japanese Patent laid open No. 59-17328 discloses that a mixed solvent of fron 113 and trichloroethane and dichloromethane is effective for the degreasing. Furthermore, Japanese patent laid open No. 1-318094 discloses a mixed solvent of fron 113, isopropyl alcohol and methyl ethyl ketone, and Japanese Patent laid open No. 2-289693 discloses an azeotropic composition comprising dichlorotetrafluoropropane (fron 234) and an aliphatic lower alcohol such as ethanol or the like. Moreover, there is examined the use of aliphatic lower alcohol such as IPA, ethanol or the like; simple ketone such as acetone or the like; and ether.

Particularly, perhaloethanes such as fron 113 and the like are chemically stable and is long in a life within the troposphere, so that they arrive at the stratosphere at a diffused state and are decomposed by sunbeams to produce halogen radicals, which cause a chain reaction with ozone to break ozone layer, and as a result it is demanded to reduce the amount of them used. As previously mentioned, it is attempted to reduce the amount of perhaloethane used by developing a mixed solvent of fron 113 and an organic solvent other than perhaloethane, but since fron 113 is an essential ingredient, there is still a problem that the amount used can not be reduced over a certain level. And also, a mixed solvent with fron 234 having a relatively small breakage property against ozone layer as compared with fron 113 is developed as mentioned above, but the breakage of ozone layer can not completely be removed. On the other hand, there are many compounds having a large toxicity against living bodies as the mixed solvent using the aliphatic lower alcohol, simple ketone or ether, so that they have a problem of badly exerting on the health of an operator in use.

WO-A-91/13697 describes a cleaning method which employs an organosilicon-containing cleaning agent. Unlike the present invention this application does not consider the tendency of the cleaning agent to damage the object to be cleaned, nor does it teach an azeotropically induced composition change, important to the present invention.

Taking the above circumstances into account, the object of the present invention is to provide a cleaning and drying solvent and a method of cleaning industrial parts by hand wiping, which are excellent in degreasing power and drying properties as well as in safety to human health without destroying the ozone layer.

### DISCLOSURE OF INVENTION

In the present invention, the cleaning of industrial parts by hand wiping is made possible by the use of a composition comprising a combination of hexamethyldisiloxane and an alcohol, namely methanol, ethanol or 2 - propanol.

The compositions for use in the present invention contain, as a principal ingredient, hexamethyldisiloxane having a purity of at least 99.0%. Hexamethyldisiloxane has a viscosity of 0.65 cSt at 25°C. In general, the volatility of a siloxane compound is proportional to the viscosity or molecular weight of the siloxane compound. Thus, hexamethyldisiloxane as the principal ingredient, having a viscosity as low as 0.65 cSt has a high volatility. Furthermore, this hexamethyldisiloxane itself has a solvent behaviour and is effective for degreasing, e.g. removing fingerprints, skin fat and the like. Moreover, it is less toxic to living things and is chemically stable, and does not damage substrates such as plastics, rubber, metal, glass and the like. In addition, it does not contain a halogen such as chlorine or the like and has no bad influence on ozone layer. The hexamethyldisiloxane having these properties has good quick-drying properties and can be used in simple hand cleaning such as finish cleaning for moulded parts and optical parts such as glass lens, plastics and the like, maintenance cleaning for mould or the like. The following chemical formula 1 represents straight-chain siloxane compounds. Among these, hexamethyldisiloxane having a viscosity of 0.65 cSt at 25°C is selected for use in the compositions of the present invention.

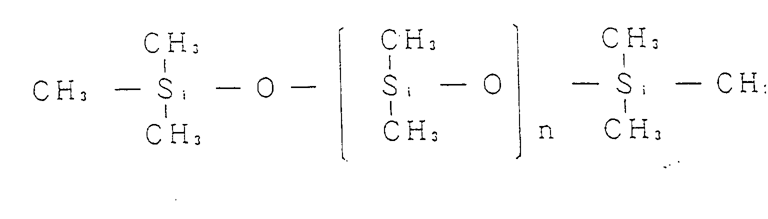

The compositions of this invention are advantageous over the use of a solvent per se in that their toxicity is considerably less, thus bringing about a reduction of the adverse influence on human health .

In the mixture of hexamethyl disiloxane and ethanol, methanol or 2-propanol, it is necessary that the mixture is in an azeotropic state (azeotropic composition) or azeotropy-like state (azeotropy-like composition).

Hexamethyl disiloxane is constructed by a chemical formula of (CH3) 3SiOSi(CH3)3 and has a viscosity of 0.65 CSt (25 ° C). The azeotropic composition of the invention can not be obtained only by mixing two or more ingredients but is required to be in a state having an azeotropic point or an azeotropic state. Such an azeotropic composition exhibits a constant boiling point different from boiling points of individual ingredients and has properties that a volatilizing rate becomes high when the boiling point is low; that the ratio of composition or distillate as a result of evaporation hardly changes; and the like. When the composition having such an azeotropic state is ethanol, hexamethyl disiloxane is 64.3-63.3 wt% and ethanol is 35.7-36.7 wt% under atmospheric pressure, in which the boiling point is 71.4 ° C. In case of methanol, hexamethyl disiloxane is 58.9-59.3 wt% and methanol is 40.7-41.1 wt%, in which the boiling point is 58.7 ° C, lower than the boiling point of each ingredient, whereby the volatility is improved and the evaporation composition and solution composition are substantially same and the change of composition due to evaporation is hardly caused to form a stable solution composition. Moreover, the azeotropic composition consisting of 2-propanol and hexamethyl disiloxane is 54.1-54.5 wt% of hexamethyl disiloxane and 45.5-45.9 wt% of 2-propanol and has a boiling point of 76.4 ° C, lower than the boiling point of each ingredient, so that the volatility is improved and also the evaporation composition and solution composition are substantially same and the composition change due to evaporation is hardly caused to form a stable solution composition.

On the other hand, even in the composition of 30-95 wt% of hexadimethyl disiloxane and 5-70 wt% of methanol and the composition of 25-95 wt% of hexamethyl disiloxane and 5-75 wt% or 2-propanol, the apparent boiling point lowers as compared with the boiling point of each ingredient (for example, the boiling point is 77.7° C at 25 wt% of hexamethyl disiloxane and 75 wt% of 2-propanol), and no large composition change due to evaporation occurs, so that the composition can be used in the cleaning by hand wiping with high cleaning quality.

Hexamethyl disiloxane as a constituting element in the mixture according to the invention is less in the toxicity against the living body, chemical stable and hardly affects plastics, rubber, metal, glass and the like. Since it does not contain halogen such as chlorine or the like, there is no influence on ozone layer. The other constituting element such as ethanol, methanol, 2-propanol or the like has a large degreasing power and conduct rapid removal of contaminant such as oil and fat and so on. Particularly, ethanol is less in the toxicity against the living body as is well-known, and high in the safeness. Therefore, the azeotropic or azeotrope-like composition consisting of the above constituting elements can suitably be used in the cleaning of industrial parts by hand wiping.

In such a mixture of hexamethyl disiloxane and ethanol, methanol or 2-propanol, it is possible to add the solvent at the aforementioned compounding ratio.

### BEST MODE FOR CARRYING OUT THE INVENTION

### [Example 1]

A commercially available hexamethyl disiloxane having a viscosity of 0.65 CSt (25° C) (made by Shin-Etsu Kagaku Kogyo Co., Ltd.) is purified to remove impurities. The commercially available hexamethyl disiloxane has a purity of 98.5% from an analysis of gaschromatography and contains hydrocarbon compounds and siloxanes having a viscosity greater than that of hexamethyldisiloxane or the like as impurities.

These impurities may remain on a target to be cleaned as a residue, so that it is required to conduct a treatment for removing ingredients more hardly evaporating than hexamethyl disiloxane. The removal of the impurities is carried out by a proper means such as distillation, fractionation and adsorption.

Table 1 shows test results of the thus prepared hexamethyl disiloxane, in which n is n of the above formula 1 and a viscosity is at 25° C. In the same table, fron-ethanol azeotropic solution and a mixed solution of ether-ethanol of 3:1 are used as a comparative example.

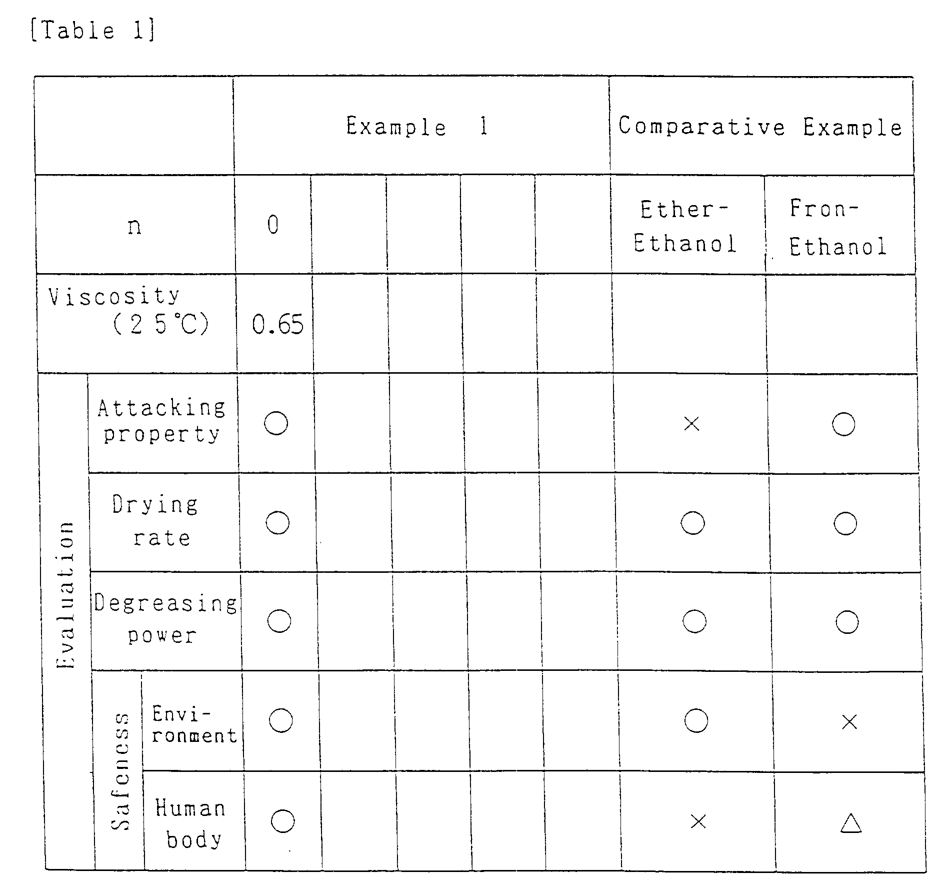

The test methods and evaluation standards in the example will be described below.

### (1) Attacking property to various materials

A plate material of aluminum, stainless steel (SUS 304), copper, glass, PP (polypropylene), PC (polycarbonate), PMMA (polymethylmethacrylate) or ABS (acrylonitrile-butadiene-styrene) is immersed in the solution shown in Table 1, and the weight change and appearance are measured after 48 hours. The appearance is measured by observing the presence or absence on the occurrence of cracking by means of a biactual microscope having a magnification of 50 times. The results are shown in a column of "attacking property" of Table 1, in which "○" is a case that the weight change against all materials is less than 0.1% and no appearance changes, and "X" is a case that the weight change against all materials is not less than 0.1% and the appearance on any materials changes. Moreover, in the ether-ethanol mixed solution as a comparative example, there are caused the cracking on the plate materials of PC, PMMA and ABS.

### (2) Drying rate

Each solution of Table 1 is placed in a beaker and a glass plate is immersed therein. Then, the glass plate is taken out in a vertical direction to observe a dried state. The glass plate is a slide glass used in a prepared specimen for microscope and is roughened at one-side surface into a cloud state. The results are shown in a column of "Drying rate" of Table 1, in which "○" is a case that the drying completes in 60 seconds and "X" is a case that the drying requires more than 61 seconds.

### (3) Degreasing power

A fingerprint (skin fat) is adhered onto a glass plate at an area of 1 cm2 and wipes out by means of a cotton cloth (5 cm x 5 cm) impregnated with 3 cc of each solution of Table 1 to conduct a test for degreasing power, during which wiping number till the removal of fingerprint is measured. The results are shown in a column of "Degreasing power" of Table 1, in which " ○ " is a case that the wiping number till the removal of fingerprint is not more than 5 times and "X" is a case that the wiping number till the removal of fingerprint is not less than 6 times.

### (4) Safeness

The presence or absence of environment breakage is shown in a column of "Environment" of Table 1, in which " ○ " is no environment breakage and "X" is an environment breakage.

The injury against human body is shown in a column of "Human body" of Table 1, in which " ○ " is no physiological activity, " Δ " is a weak physiological activity and "X" is a strong physiological activity.

Next, each solution of Table 1 is placed in a hand wrap and used to conduct handle finishing to each plastic plate of PMMA, PC containing glass, PP and ABS. As a result, there is no attacking property against all plastic plates and good results are obtained.

### [Example 2]

A commercially available hexamethyl disiloxane is purified through distillation, fractionation and use of adsorbent to remove compounds more hardly distilling as compared with hexamethyl disiloxane, such as hydrocarbons, siloxane having a viscosity of not less than 1 CSt (25° C) and the like as impurities. These impurities are possible to remain on an object to be cleaned as a residue. The thus purified hexamethyl disiloxane is analyzed by gas chromatography to have a purity of not less than 99.0%. Further, the hexamethyl disiloxane has a viscosity of 0.65 CS (25° C).

100 g of each of the thus purified hexamethyl disiloxane and ethanol having a purity of not less than 99.5% is placed in a distillation flask to be 200 g in total, which is fractionated in a fractionating column having a theoretical stage number of 30 stages under atmospheric pressure. An azeotropic fraction is obtained at 71.4 ° C by such a fractionation. This fraction has a composition of 64.3-63.3% of hexamethyl disiloxane and 35.7-36.7% of ethanol as analyzed by gas chromatography.

Moreover, a solvent can be added in this example. As the solvent, use can be made of at least one member selected from among, for example, alcohols such as methanol, n-propyl alcohol and i-propyl alcohol; ketones such as acetone and methyl ethyl ketone; and esters such as ethyl acetate and propyl acetate. The dissolving power can be increased by adding the above solvent in an amount of, for example, 1 to 15% by weight.

### [Example 3]

200 g of a mixture is prepared by mixing hexamethyl disiloxane purified in Example 2 within a range of 99.0-10.0 % and ethanol within a range of 1.0-90.0 wt% while varying the mixing ratio every 1 wt%, and a boiling point of such a mixture is measured. The results are shown in columns of "Before distillation" and "Observed boiling point" in Table 2. Mixtures having a mixing ratio of hexamethyl disiloxane of not less than 35.0 wt% are azeotrope-like compositions similar to the azeotropic composition of Example 2 because the increase of the boiling point is less than 1.0 ° C, which are referred to as a product of Example 3 hereinafter.

Even in this example, the solvent described in Example 2 may be added.

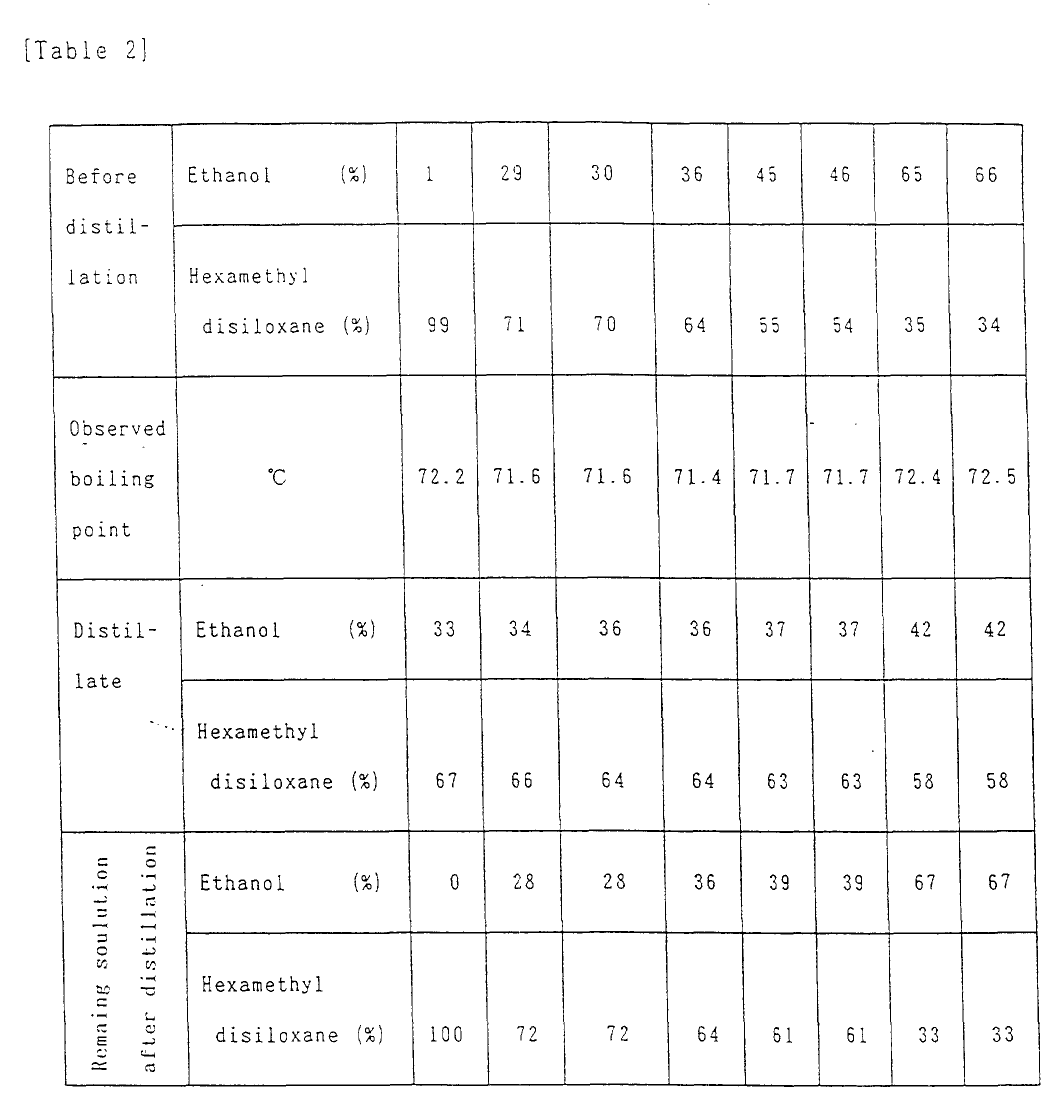

### [Example 4]

200 g of a mixture is prepared by mixing hexamethyl disiloxane purified in Example 2 within a range of 99.0-10.0 % and ethanol within a range of 1.0-90.0 wt% while varying the mixing ratio every 1 wt%. These mixture are simply distilled in a distillation flask. Moreover, the mixture before distillation, distillate and remaining solution after distillation are analyzed by gas chromatography. The results are shown in Table 2 of Example 3. In Table 2 is described only a part of various mixing ratios every wt%.

When the composition before distillation is compared with the composition of distillate, the composition change of not more than 5 wt% is within ranges of 70.0-55.0 wt% of hexamethyl disiloxane and 30.0-45.0 wt% of ethanol. The distillate having a composition change of 5 wt% can be used as an azeotrope-like composition in the same manner as in Example 2 and is referred to as a product of Example 4 hereinafter. Even in Example 4, the solvent may be added in the same manner as in Example 2.

### [Example 5]

In Example 5, the inspection on the products of Example 2, Examples 3 and 4 is explained below. At first, each of the distillate of Example 2 and the product of Example 3 is placed in a hand wrap and used as a handle finishing solution. As an object to be hand-cleaned, each plastic plate of PMMA (polymethylmethacrylate), glass filler containing PC (polycarbonate), PP (polypropylene) and ABS (acrylonitrile-butadiene-styrene) is used, a surface of which is finished by hand. As a result, there is no problem on the attacking property and the like against all plastic plates.

Then, a test specimen having a size of 5 x 50 x 2 mm made from the above plastic is placed in a glass bottle and 100 g of the mixed solution of Example 2 varying the mixing ratio every 1 wt% is filled therein to stand at room temperature under room humidity for 48 hours. The test specimen is taken out to measure weight change and appearance change. As a comparative example, a mixed solution of ether and ethanol (ether:ethanol = 3:1) and fron 113 are similarly used. The results are shown in Table 3. In this table, " ○ " is a case that the weight change is less than 1% and there is no cracking and dissolution, "△" is a case that the weight change is not less than 1% and there is no cracking and dissolution, "X" is a case that the weight change is not less than 1% and there are caused cracking and dissolution. Moreover, Table 3 shows only a part of various mixing rations of hexamethyl disiloxane and ethanol every 1 wt%.

**[Table 3]**

| | PMMA | PC(containg glass) | PP | ABS |
|---|---|---|---|---|
| Hexamethyl disiloxane : Ethanol = 90 : 10 | ○ | ○ | ○ | ○ |
| Hexamethyl disiloxane : Ethanol = 70 : 30 | ○ | ○ | ○ | ○ |
| Hexamethyl disiloxane : Ethanol = 64 :36 | ○ | ○ | ○ | ○ |
| Hexamethyl disiloxane : Ethanol = 50 : 50 | ○ | ○ | ○ | ○ |
| Ether:Ethanol=3:1 mixed solution | X | X | Δ | X |
| Fron 113 | ○ | ○ | Δ | ○ |

### [Example 6]

A commercially available hexamethyl disiloxane is purified through distillation, fractionation and use of adsorbent to remove hydrocarbons hardly distilling as compared with hexamethyl disiloxane, siloxane having a viscosity of not less than 1 CSt (25° C) and the like as impurities. The thus purified hexamethyl disiloxane is analyzed by gas chromatography to have a purity of not less than 99.0%. Further, the hexamethyl disiloxane has a viscosity of 0.65 CSt (25 ° C).

200 g of a mixture of the thus purified hexamethyl disiloxane and methanol at a weight ratio of 1:1 is placed in a distillation flask and fractionated in a fractionating column having a theoretical stage number of 30 stages under atmospheric pressure. An azeotropic fraction is obtained at 58.7° C by such a fractionating. This fraction has a composition of 58.9-59.3% of hexamethyl disiloxane and 40.7-41.1% of methanol as analyzed by gas chromatography. Furthermore, a composition of 30-95 wt% of hexamethyl disiloxane and 5-70 wt% of methanol is prepared as an azeotrope-like composition.

Moreover, a solvent can be added in this example. As the solvent, use can be made of at least one member selected from among, for example, ketones such as acetone and methyl ethyl ketone; and esters such as ethyl acetate and methyl propionate. The dissolving power can therewith be increased by adding the above solvent in an amount of, for example, 1 to 20% by weight, so that oils and fats can be removed with enhanced efficiency in the cleaning.

### [Example 7]

200 g of a mixture of hexamethyl disiloxane purified in Example 6 and 2-propanol at a weight ratio of 1:1 is placed in a weight flask and fractionated in a fractionating column having a theoretical stage number of 30 stages under atmospheric pressure. An azeotropic fraction is obtained at 76.4° C by fractionation. This fraction has a composition of 54.1-54.5% of hexamethyl disiloxane and 45.5-45.9% of 2-propanol as analyzed by gas chromatography. Furthermore, a composition of 25-95 wt% of hexamethyl disilane and 5-75 wt% of 2-propanol is prepared as an azeotrope-like composition.

The solvent shown in Example 6 may be added to these compositions. By such an addition, more stable properties and dissolving power can be increased without degrading the performances and the like.

### [Example 8]

In this example, the inspection on the products of Examples 6 and 7 is explained below.

At first, each of the distillate of Examples 6 and 7 and compositions similar thereto is placed in a hand wrap container and used as a handle finishing solution. As an object to be hand-cleaned, each plastic plate of PMMA (polymethylmethacrylate), glass filler containing PC (polycarbonate), PP (polypropylene) and ABS (acrylonitrile-butadiene-styrene) is used, a surface of which is finished in hand. As a result, there is no problem on the attacking property and the like against all plastic plates.

Then, a test specimen having a size of 5 x 50 x 2 mm made from the above plastic is placed in a glass bottle and 100 g of the mixed solution shown in Table 4 is filled therein to stand at room temperature under room humidity for 48 hours. The test specimen is taken out to measure weight change and appearance change. As a comparative example, a mixed solution of ether and ethanol (ether: ethanol = 3:1) and fron 113 are similarly used. The results are shown in Table 4. In this table, "○" is a case that the weight change is less than 1% and there is no cracking and dissolution, " Δ " is a case that the weight change is not less than 1% and there is no cracking and dissolution, "X" is a case that the weight change is not less than 1% and there are caused cracking and dissolution.

**[Table 4]**

| | PMMA | PC(containg glass) | PP | ABS |
|---|---|---|---|---|
| Hexamethyl disiloxane : Methanol = 59.1 : 40.9 (Azeotrope) | ○ | ○ | ○ | ○ |
| Hexamethyl disiloxane : Methanol = 90 : 10 | ○ | ○ | ○ | ○ |
| Hexamethyl disiloxane : Methanol = 80 : 20 | ○ | ○ | ○ | ○ |
| Hexamethyl disiloxane : Methanol = 50 : 50 | ○ | ○ | ○ | ○ |
| Hexamethyl disiloxane : 2-propanol = 54.3 : 45.6 (Azeotrope) | ○ | ○ | ○ | ○ |
| Hexamethyl disiloxane : 2-propanol = 90 : 10 | ○ | ○ | ○ | ○ |
| Hexamethyl disiloxane : 2-propanol = 75 : 25 | ○ | ○ | ○ | ○ |
| Hexamethyl disiloxane : 2-propanol = 60 : 40 | ○ | ○ | ○ | ○ |
| Ether:Ethanol=3:1 mixed solution | X | X | Δ | X |
| Fron 113 | ○ | ○ | Δ | ○ |

Each composition of Examples 6 and 7 is placed in a hand wrap container, and a clean wiping paper is impregnated with a proper amount of the composition from the hand wrap container and then an optical leans adhered with a centering oil after optical centering work is cleaned with the clean wrap paper in hand. As a result, the centering oil can completely be removed to clean the optical lens and good results are obtained without causing scorch of the optical lens. Further, when the same test is carried out by using the azeotrope-like compositions of Examples 6 and 7, good results are obtained.

### INDUSTRIAL APPLICABILITY

The compositions of the present invention are excellent in degreasing power and dryability and, hence, can be used in the cleaning of industrial parts by hand wiping. Further, solvents containing a halogen compound are not used in the cleaning by hand wiping according to the present invention, so that there is no danger of destroying the ozone layer. This cleaning method provides an effective substitute for cleaning with fron.

## Claims

1. A cleaning and drying solvent characterised by comprising 55 to 70% by weight of hexamethyldisiloxane having a purity of at least 99.0% and 30 to 45% by weight of ethanol, said solvent exhibiting azeotropic or azeotrope-like characteristics at 760 Torr.

2. A cleaning and drying solvent characterised by comprising 30 to 95% by weight of hexamethyldisiloxane having a purity of at least 99.0% and 5 to 70% by weight of methanol, said solvent exhibiting azeotropic or azeotrope-like characteristics at 760 Torr.

3. A cleaning and drying solvent characterisd by comprising 25 to 95% by weight of hexamethyldisiloxane having a purity of at least 99.0% and 5 to 75% by weight of 2-propanol, said solvent exhibiting azeotropic or azeotrope-like characteristics at 760 Torr.

4. The cleaning and drying solvent according to claim 1, characterised by consisting of 63.3 to 64.3% by weight of said hexamethyldisiloxane and 35.7 to 36.7% weight of ethanol, said solvent being an azeotrope having a boiling point of 71.4°C at 760 Torr.

5. The cleaning and drying solvent according to claim 2, characterised by consisting of 58.9 to 59.3% by weight of said hexamethyldisiloxane and 40.7 to 41.1 % by weight of methanol, said solvent being an azeotrope having a boiling point of 58.7°C at 760 Torr.

6. The cleaning and drying solvent according to claim 3, characterised by consisting of 54.1 to 54.5% by weight of said hexamethyldisiloxane and 45.5 to 45.9% by weight of 2-propanol, said solvent being an azeotrope having a boiling point of 76.4°C at 760 Torr.

7. A method for cleaning industrial parts comprising wiping by hand the surface of an item to be cleaned with a material impregnated with a composition to thereby remove dirt from the item, **characterised in that** said composition comprises 55 to 70% by weight of hexamethyldisiloxane having a purity of at least 99.0% and 30 to 45% by weight of ethanol and said composition exhibits azeotropic or azeotrope-like characteristics at 760 Torr.

8. A method for cleaning industrial parts comprising wiping by hand the surface of an item to be cleaned with a material impregnated with a composition to thereby remove dirt from the item, **characterised in that** said composition comprises 30 to 95% by weight of hexamethyldisiloxane having a purity of at least 99.0% and 5 to 70% by weight of methanol and said composition exhibits azeotropic or azeotrope-like characteristics at 760 Torr.

9. A method for cleaning industrial parts comprising wiping by hand the surface of an item to be cleaned with a material impregnated with a composition to thereby remove dirt from the item, **characterised in that** said composition comprises 25 to 95% by weight of hexamethyldisiloxane having a purity of at least 99.0% and 5 to 75% by weight of 2-propanol and said composition exhibits azeotropic or azeotrope-like characteristics at 760 Torr.

10. The cleaning method according to claim 7, **characterised in that** said composition is an azeotropic composition consisting of 63.3 to 64.3% by weight of said hexamethyldisiloxane and 35.7 to 36.7% by weight of ethanol, said azeotropic composition having a boiling point of 71.4°C at 760 Torr.

11. The cleaning method according to claim 8, **characterised in that** said composition is an azeotropic composition consisting of 58.9 to 59.3% by weight of said hexamethyldisiloxane and 40.7 to 41.1% by weight of methanol, said azeotropic composition having a boiling point of 58.7°C at 760 Torr.

12. The cleaning method according to claim 9, **characterised in that** said composition is an azeotropic composition consisting of 54.1 to 54.5% by weight of said hexamethyldisiloxane and 45.5 to 45.9% by weight of 2-propanol, said azeotropic composition having a boiling point of 76.4°C at 760 Torr.

## Patentansprüche

1. Ein Reinigungs- und Trocknungslösemittel, **dadurch gekennzeichnet**, daß es 55 bis 70 Gew.-% Hexamethyldisiloxan mit einer Reinheit von mindestens 99,0 % und 30 bis 45 Gew.-% Ethanol enthält, wobei das Lösemittel bei 760 Torr azeotrope oder Azeotropähnliche Eigenschaften aufweist.

2. Ein Reinigungs- und Trocknungslösemittel, **dadurch gekennzeichnet**, daß es 30 bis 95 Gew.-% Hexamethyldisiloxan mit einer Reinheit von mindestens 99,0 % und 5 bis 70 Gew.-% Methanol enthält, wobei das Lösemittel bei 760 Torr azeotrope oder Azeotropähnliche Eigenschaften aufweist.

3. Ein Reinigungs- und Trocknungslösemittel, **dadurch gekennzeichnet**, daß es 25 bis 95 Gew.-% Hexamethyldisiloxan mit einer Reinheit von mindestens 99,0 % und 5 bis 75 Gew.-% 2-Propanol enthält, wobei das Lösemittel bei 760 Torr azeotrope oder Azeotropähnliche Eigenschaften aufweist.

4. Das Reinigung- und Trocknungslösemittel nach Anspruch 1, **dadurch gekennzeichnet**, daß es aus 63,3 bis 64,3 Gew.-% Hexamethyldisiloxan und 35,7 bis 36,7 Gew.-% Ethanol besteht, wobei das Lösemittel ein Azeotrop mit einem Siedepunkt von 71,4°C bei 760 Torr ist.

5. Das Reinigung- und Trocknungslösemittel nach Anspruch 2, **dadurch gekennzeichnet**, daß es aus 58,9 bis 59,3 Gew.-% Hexamethyldisiloxan und 40,7 bis 41,1 Gew.-% Methanol besteht, wobei das Lösemittel ein Azeotrop mit einem Siedepunkt von 58,7°C bei 760 Torr ist.

6. Das Reinigung- und Trocknungslösemittel nach Anspruch 3, **dadurch gekennzeichnet**, daß es aus 54,1 bis 54,5 Gew.-% Hexamethyldisiloxan und 45,5 bis 45,9 Gew.-% 2-Propanol besteht, wobei das Lösemittel ein Azeotrop mit einem Siedepunkt von 76,4°C bei 760 Torr ist.

7. Ein Verfahren zum Reinigen von industriellen Teilen, umfassend das Abwischen der Oberfläche eines zu reinigenden Gegenstandes von Hand mit einem mit einer Zusammensetzung imprägnierten Material, um damit Schmutz vom Gegenstand zu entfernen, **dadurch gekennzeichnet**, daß die Zusammensetzung 55 bis 70 Gew.-% Hexamethyldisiloxan mit einer Reinheit von mindestens 99.0 % und 30 bis 45 Gew.-% Ethanol umfaßt und daß die Zusammensetzung bei 760 Torr azeotrope oder Azeotropähnliche Eigenschaften aufweist.

8. Ein Verfahren zum Reinigen von industriellen Teilen, umfassend das Abwischen der Oberfläche eines zu reinigenden Gegenstandes von Hand mit einem mit einer Zusammensetzung imprägnierten Material, um damit Schmutz vom Gegenstand zu entfernen, **dadurch gekennzeichnet**, daß die Zusammensetzung 30 bis 95 Gew.-% Hexamethyldisiloxan mit einer Reinheit von mindestens 99.0 % und 5 bis 70 Gew.-% Methanol umfaßt und daß die Zusammensetzung bei 760 Torr azeotrope oder Azeotropähnliche Eigenschaften aufweist.

9. Ein Verfahren zum Reinigen von industriellen Teilen, umfassend das Abwischen der Oberfläche eines zu reinigenden Gegenstandes von Hand mit einem mit einer Zusammensetzung imprägnierten Material, um damit Schmutz vom Gegenstand zu entfernen, **dadurch gekennzeichnet**, daß die Zusammensetzung 25 bis 95 Gew.-% Hexamethyldisiloxan mit einer Reinheit von mindestens 99.0 % und 5 bis 75 Gew.-% 2-Propanol umfaßt und daß die Zusammensetzung bei 760 Torr azeotrope oder Azeotropähnliche Eigenschaften aufweist.

10. Das Reinigungsverfahren nach Anspruch 7, **dadurch gekennzeichnet**, daß die Zusammensetzung eine azeotrope Zusammensetzung ist, die aus 63,3 bis 64,3 Gew.-% Hexamethyldisiloxan und 35,7 bis 36,7 Gew.-% Ethanol besteht, wobei die azeotrope Zusammensetzung bei 760 Torr einen Siedepunkt von 71,4°C hat.

11. Das Reinigungsverfahren nach Anspruch 8, **dadurch gekennzeichnet**, daß die Zusammensetzung eine azeotrope Zusammensetzung ist, die aus 58,9 bis 59,3 Gew.-% Hexamethyldisiloxan und 40,7 bis 41,1 Gew.-% Methanol besteht, wobei die azeotrope Zusammensetzung bei 760 Torr einen Siedepunkt von 58,7°C hat.

12. Das Reinigungsverfahren nach Anspruch 9, **dadurch gekennzeichnet**, daß die Zusammensetzung eine azeotrope Zusammensetzung ist, die aus 54,1 bis 54,5 Gew.-% Hexamethyldisiloxan und 45,5 bis 45,9 Gew.-% 2-Propanol besteht, wobei die azeotrope Zusammensetzung bei 760 Torr einen Siedepunkt von 76,4°C hat.

## Revendications

1. Solvant de nettoyage et séchage, **caractérisé en ce qu**'il comprend 55 à 70 % en poids d'hexaméthyldisiloxane ayant une pureté d'au moins 99,0 % et 30 à 45 % en poids d'éthanol, ledit solvant présentant des caractéristiques azéotropes ou de type azéotrope à 760 torrs.

2. Solvant de nettoyage et séchage, **caractérisé en ce qu**'il comprend 30 à 95 % en poids d'hexaméthyldisiloxane ayant une pureté d'au moins 99,0 % et 5 à 70 % en poids de méthanol, ledit solvant présentant des caractéristiques azéotropes ou de type azéotrope à 760 torrs.

3. Solvant de nettoyage et séchage, **caractérisé en ce qu**'il comprend 25 à 95 % en poids d'hexaméthyldisiloxane ayant une pureté d'au moins 99,0 % et 5 à 75 % en poids de 2-propanol, ledit solvant présentant des caractéristiques azéotropes ou de type azéotrope à 760 torrs.

4. Solvant de nettoyage et séchage suivant la revendication 1, **caractérisé en ce qu**'il consiste en une quantité de 63,3 à 64,3 % en poids de l'hexaméthyldisiloxane et une quantité de 35,7 à 36,7 % en poids d'éthanol, ledit solvant étant un azéotrope ayant un point d'ébullition de 71,4°C à 760 torrs.

5. Solvant de nettoyage et séchage suivant la revendication 2, **caractérisé en ce qu**'il consiste en une quantité de 58,9 à 59,3 % en poids de l'hexaméthyldisiloxane et une quantité de 40,7 à 41,1 % en poids de méthanol, ledit solvant étant un azéotrope ayant un point d'ébullition de 58,7°C à 760 torrs.

6. Solvant de nettoyage et séchage suivant la revendication 3, **caractérisé en ce qu**'il consiste en une quantité de 54,1 à 54,5 % en poids de l'hexaméthyldisiloxane et une quantité de 45,5 à 45,9 % en poids de 2-propanol, ledit solvant étant un azéotrope ayant un point d'ébullition de 76,4°C à 760 torrs.

7. Procédé pour le nettoyage de pièces industrielles, comprenant l'essuyage manuel de la surface d'un article à nettoyer avec une matière imprégnée d'une composition pour éliminer ainsi la poussière de cet article, **caractérisé en ce que** ladite composition comprend 55 à 70 % en poids d'hexaméthyldisiloxane ayant une pureté d'au moins 99,0 % et 30 à 45 % en poids d'éthanol et ladite composition présente des caractéristiques azéotropes ou de type azéotrope à 760 torrs.

8. Procédé pour le nettoyage de pièces industrielles, comprenant l'essuyage manuel de la surface d'un article à nettoyer avec une matière imprégnée d'une composition pour éliminer ainsi la poussière de l'article, **caractérisé en ce que** ladite composition comprend 30 à 95 % en poids d'hexaméthyldisiloxane ayant une pureté d'au moins 99,0 % et 5 à 70 % en poids de méthanol et ladite composition présente des caractéristiques azéotropes ou de type azéotrope à 760 torrs.

9. Procédé pour le nettoyage de pièces industrielles, comprenant l'essuyage manuel de la surface d'un article à nettoyer avec une matière imprégnée d'une composition pour éliminer ainsi la poussière de l'article, **caractérisé en ce que** ladite composition comprend 25 à 95 % en poids d'hexaméthyldisiloxane ayant une pureté d'au moins 99,0 % et 5 à 75 % en poids de 2-propanol et ladite composition présente des caractéristiques azéotropes ou de type azéotrope à 760 torrs.

10. Procédé de nettoyage suivant la revendication 7, **caractérisé en ce que** la composition est une composition azéotrope consistant en une quantité de 63,3 à 64,3 % en poids de l'hexaméthyldisiloxane et une quantité de 35,7 à 36,7 % en poids d'éthanol, ladite composition azéotrope ayant un point d'ébullition de 71,4°C à 760 torrs.

11. Procédé de nettoyage suivant la revendication 8, **caractérisé en ce que** la composition est une composition azéotrope consistant en une quantité de 58,9 à 59,3 % en poids de l'hexaméthyldisiloxane et une quantité de 40,7 à 41,1 % en poids de méthanol, ladite composition azéotrope ayant un point d'ébullition de 58,7°C à 760 torrs.

12. Procédé de nettoyage suivant la revendication 9, **caractérisé en ce que** la composition est une composition azéotrope consistant en une quantité de 54,1 à 54,5 % en poids de l'hexaméthyldisiloxane et une quantité de 45,5 à 45,9 % en poids de 2-propanol, ladite composition azéotrope ayant un point d'ébullition de 76,4°C à 760 torrs.
